# EUROPÄISCHE PATENTANMELDUNG

(11) **EP 1 188 361 A1**
(43) Veröffentlichungstag der Anmeldung: **20.03.2002**
(21) Anmeldenummer: 00123204.0
(22) Anmeldetag: 26.10.2000
(51) Int. Cl.: A01D 34/416

(54) **Schneidkopf für Fadenschneider**

(30) Priorität: 22.08.2000 DE 10041127
(71) Anmelder: Manfred, Sälinger, Maschinen- und Apparatebau GmbH, 77652 Offenburg (DE)
(72) Erfinder: Sälinger, Manfred, 77652 Offenburg (DE)

(57) **Zusammenfassung**

Die Erfindung betrifft einen Schneidkopf für Fadenschneider für extremen Einsatz mit mehrfacher Fadenlagerung und einfacher Einfädelung, bestehend aus einem Fadenführungsgehäuse (1) und mindestens einer Pressscheibe (2), die durch die Spannkraft der Spannmutter (3) auf den Schneidfaden eine verformbare Einwirkung ausübt.
Derartige Vorrichtungen werden an Rasentrimmer in der Landschafts- und Gartenpflege eingesetzt. Bei den bereits bekannten Schneidköpfen werden häufig Schneidfäden aufgespult und durch Fliehkraft abgespult und so kommt in der Regel nur ein Faden zum Einsatz, deren Schneidwirkung auch noch durch die leicht biegsame Auslegung des Fadens beschränkt wird.
Die Erfindung bezieht sich auf einen Schneidkopf für Fadenschneider, deren Ursprungsaufgabe im Laufe der Zeit wesentlich sich verändert hat und höhere Anforderungen heute erwartet. War der Ursprung der Motorsense für die schwer zugänglichen Bereiche einer Rasenfläche gedacht, so sind die heutigen Anforderungen ausgedehnt auf unwegsamen Bereiche einer Landschaft mit allen den dort vorfindbaren Pflanzen.
Dem Gerecht zu werden war die Möglichkeit- je nach Bedarf- von der einreihigen Fadenordnung nach einer mehrstufigen Fadenreihe auszuweichen.

## Beschreibung

Die Erfindung betrifft einen Schneidkopf für Fadenschneider für extremen Einsatz mit mehrfacher Fadenlagerung und einfacher Einfädelung, bestehend aus einem Fadenführungsgehäuse und mindestens einer Pressscheibe, die durch die Spannkraft der Spannmutter auf den Schneidfaden eine verformbare Einwirkung ausübt.

Derartige Vorrichtungen werden an Rasentrimmer in der Landschafts- und Gartenpflege eingesetzt. Bei den bereits bekannten Schneidköpfen werden häufig Schneidfäden aufgespult und durch Fliehkraft abgespult und so kommt in der Regel nur ein Faden zum Einsatz, deren Schneidwirkung auch noch durch die leicht biegsame Auslegung des Fadens beschränkt wird.

Ein anderer bereits bekannter Schneidkopf besitzt in radialer Richtung mehrere über die gesamte Höhe Schlitze, deren einzelne Zylindersegmente von einem gebogenen Schneidfaden so umschlingt wird, dass die Fadenenden etwa gleichlang nach aussen ragen. Nachteilig bei dieser Konstruktion ist, dass sich die einwirkenden Torsionskräfte der rotierenden Fäden auf die geschwächten Zylinderwände negativ auswirken; insbesonders wenn mehrere Schneidfäden eingesetzt werden.

Einer hohen Beanspruchung unterliegen diese Schneidknöpfe besonders bei gewerblichen Landschafts- und Gartenbaubetriebe, die darüberhinaus eine stärkere Schneid-/Schlagkraft fordern.

Die vorliegende Erfindung schwächt die zylindrische Fadenaufnahme des Schneidkopfes nur unwesentlich und lässt dadurch ein höheres Drehmoment auf den Schneidkopf zu.

### Beschreibung

Die Erfindung bezieht sich auf einen Schneidkopf für Fadenschneider, deren Ursprungsaufgabe sich im Laufe der Zeit wesentlich verändert hat und heute höhere Anforderungen erwartet. War der Ursprung der Morsense für die schwer zugänglichen Bereiche einer Rasenfläche gedacht, so sind die heutigen Anforderungen ausgedehnt auf unwegsamen Bereichen einer Landschaft mit allen den dort vorfindbaren Pflanzen.
Dem gerecht zu werden war die Möglichkeit - je nach Bedarf - von der einreihigen Fadenanordnung nach einer mehrstufigen Fadenreihe auszuweichen.
Dazu werden zwischen Fadenführung (1) und der Spannmutter (3) nach Bedarf Pressscheiben (2) eingefügt, deren Unterseite nach innen verjüngt und zusätzlich Haltekerben besitzen, um die Haltekraft zu erhöhen. Je nach Ausführung können zur Durchführung der Schneidfäden Langlöcher (4) oder Durchbrüche für mehrstufige Lagen oder nur Durchgangsbohrungen einlagige Schneidfadenanordnung in der Fadenführung vorgesehen sein. Spannmutter (3) und Fadenführung (1) sind mit Gewinde (6) ausgestattet, deren Festschraubrichtung der Drehrichtung des Schneidkopfes entspricht.

Um den Fadenschneidkopf universell einsetzbar zu machen, ist in der Spannmutter (3) eine Durchgangsbohrung (7) für die wesentlichen Antriebswellengewinde vorgesehen.

### Die Ausführungsbeispiele zeigen:

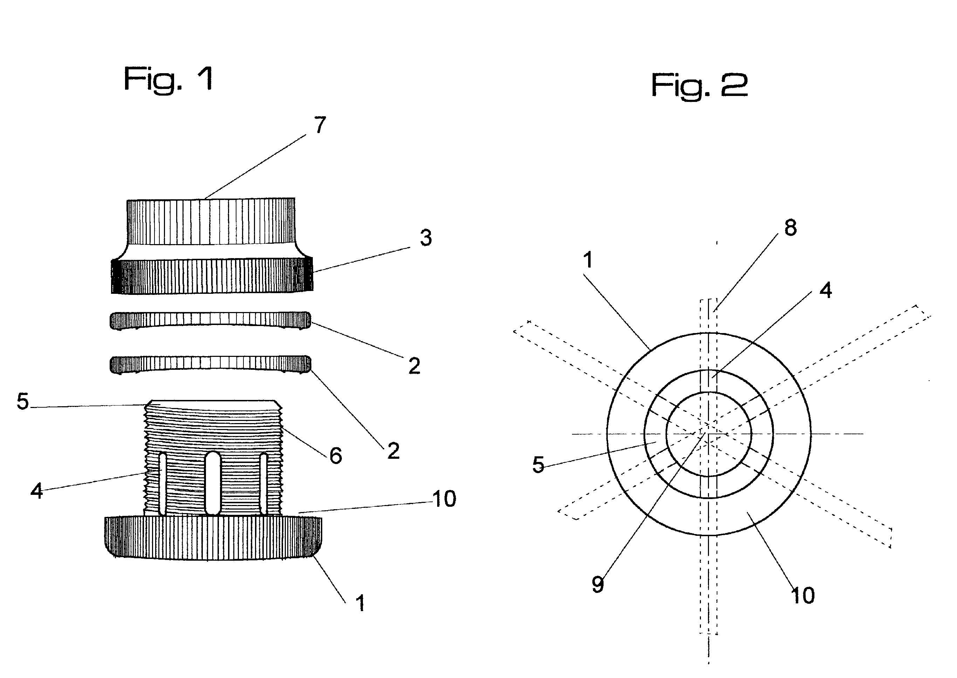

Fig. 1 die Lagen der einzelnen Bauteile bei einer 2 reihigen Schneidfaden-Anordnung, wobei ein Schneidfaden (8) zwischen der Auflagefläche (10) und Pressscheibe (2) und der andere Schneidfaden (8) auf der Rückseite von Pressscheibe (2) und der weiteren Pressscheibe (2) liegt und diese durch die Spannmutter angezogen werden.

Fig. 2 zeigt eine Lage der Schneidfäden (8) bei Ausnutzung aller Durchgangsöffnungen (4), wobei die Überkreuzung der Lagen in der Durchbiegung des Schneidfadens ermöglicht wird.

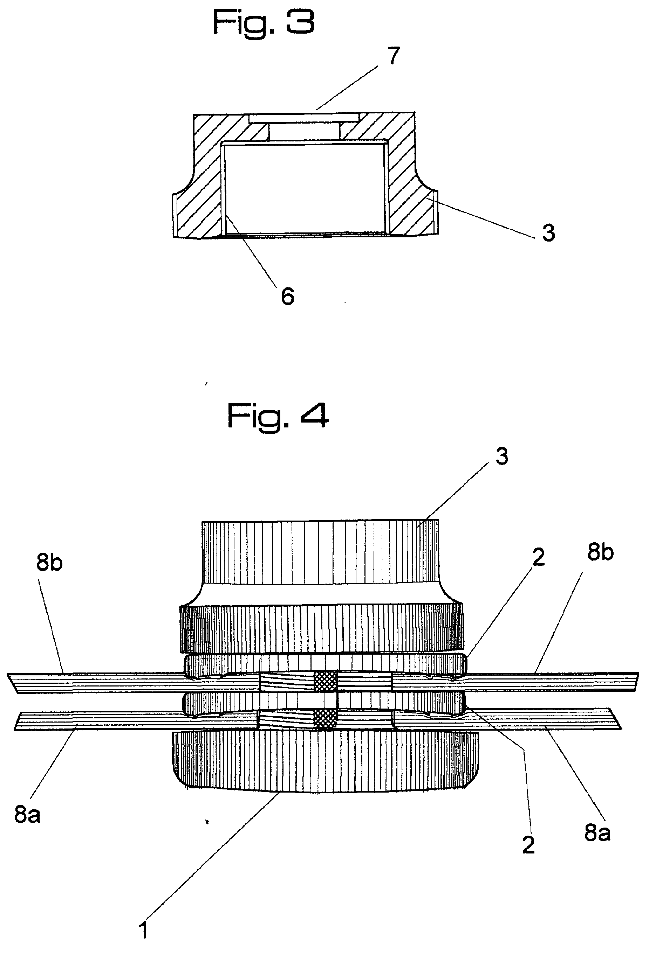

Fig. 3 stellt den Schnitt der Spannmutter (3) mit der Durchgangsbohrung (7) dar.

Fig. 4 der verspannte Schneidknopf mit 2 Lagen Schneidfäden (8a,8b) und den Einkerbungen durch die Pressscheiben (2) in den Schneidfäden (8a,8b).

## Patentansprüche

1. Schneidkopf für die Montage an Motorsensen (auch Fadenschneider genannt) mit Durchgangswelle **dadurch gekennzeichnet, daß** die Fadenführung (1) mindenstens ein Durchgangslangloch (4) besitzt.

2. Schneidkopf nach Anspruch 1, **dadurch gekennzeichnet, daß** anstelle von Langlöchern mindestens eine Durchgangsbohrung vorhanden ist.

3. Schneidkopf nach Anspruch 1, **dadurch gekennzeichnet, daß** zum Festziehen des Schneidfadens (8) zwischen Spannmutter (3) und Auflage (10) der Fadenführung mindestens eine Pressscheibe (2) eingefügt ist, deren Unterseite nach innen verjüngt und zusätzlich Haltekerben besitzt, um die Haltekraft zu erhöhen.

4. Schneidkopf nach Anspruch 3 **dadurch gekennzeichnet, daß** bei weiteren Schneidfadenlagen wie Fig. 4 (8a,8b) weitere Pressscheiben 2 verwendet werden.

5. Schneidkopf nach Anspruch 2, **dadurch gekennzeichnet, daß** zum Festziehen des Schneidfadens (8) zwischen Spannmutter (3) und Auflage (10) der Fadenführung mindestens eine Pressscheibe (2) eingefügt ist , deren Unterseite nach innen verjüngt und zusätzlich Haltekerben besitzt, um die Haltekraft zu erhöhen.

6. Schneidkopf nach Anspruch 5, jedoch mit weiteren vertikalen Durchgangsbohrungen für weitere Schneidfadenlagen und zum Festziehen der Schneidfäden (8a,8b) zwischen Spannmutter (3) und Auflage (10) und der Fadenführung und jeder Schneidfadenlage eine Pressscheibe (2) eingefügt ist, deren Unterseite nach innen verjüngt und zusätzlich Haltekerben besitzt, um die Haltekraft zu erhöhen.
